# EUROPEAN PATENT SPECIFICATION

(11) **EP 1 668 814 B1**
(45) Date of publication and mention of the grant of the patent: **01.12.2010**
(21) Application number: 04770477.0
(22) Date of filing: 07.09.2004
(51) Int. Cl.: H04L 9/00, H04K 1/00

(54) **Secure multicast transmission**
Sichere Multicast-Übertragung
Transmission de multidiffusion securisée

(30) Priority: 11.09.2003 IL 15788603
(43) Date of publication of application: 14.06.2006
(73) Proprietor: Bamboo Mediacasting Ltd., Kfar Saba 44150 (IL)
(72) Inventor: ENTIN, Leonid, 71700 MODIIN (IL); AMRAM, Noam, 58382 HOLON (IL); FUCHS, Meir, 71700 MODYIN (IL)
(74) Representative: van Westenbrugge, Andries
(86) International application number: PCT/IL2004/000806
(87) International publication number: WO 2005/025122

(56) References cited:
- US-A- 5 247 575
- US-A- 5 987 137
- US-A1- 2003 084 284
- US-B1- 6 553 540
- IAN BROWN ET AL: "Watercasting: Distributed Watermarking of Multicast Media" NETWORKED GROUP COMMUNICATION; [LECTURE NOTES IN COMPUTER SCIENCE;;LNCS], SPRINGER-VERLAG, BERLIN/HEIDELBERG, vol. 1736, 20 November 1999 (1999-11-20), pages 286-300, XP019000303 ISBN: 978-3-540-66782-7
- PARVIAINEN R ET AL: "LARGE SCALE DISTRIBUTED WATERMARKING OF MULTICAST MEDIA THROUGH ENCRYPTION" INTERNET CITATION, [Online] 2001, pages 1-10, XP002239136 Retrieved from the Internet: URL:http://citeseer.nj.nec.com7447585.html >
- CHU H ET AL: "A SECURE MULTICAST PROTOCOL WITH COPYRIGHT PROTECTION" COMPUTER COMMUNICATION REVIEW, ACM, NEW YORK, NY, US, vol. 32, no. 2, 1 April 2002 (2002-04-01), pages 42-60, XP001133035 ISSN: 0146-4833
- PAUL JUDGE ET AL: "Security Issues and Solutions in Multicast Content Distribution: A Survey" IEEE NETWORK, IEEE SERVICE CENTER, NEW YORK, NY, US, vol. 17, no. 1, 1 January 2003 (2003-01-01), pages 30-36, XP011093529 ISSN: 0890-8044

## Description

### FIELD OF THE INVENTION

The present invention relates generally to communication networks and particularly to methods of preventing unauthorized dissemination of multicast data.

### BACKGROUND OF THE INVENTION

Cellular phones can be used for receiving video clips and other data, in addition to their use for point to point telephone communication. Multicasting the data to the cellular phones or to other mobile stations allows efficient use of the available bandwidth, such that large amounts of data can be provided to the cellular phones without requiring prohibitive amounts of bandwidth. In some cases, users are required to subscribe and pay for the multicast data if they desire to receive the data. In order to prevent other cellular phones that were not subscribed to the data from receiving the data without paying, the data is encrypted and only subscribers are provided with the decryption key. A problem arises, however, if one of the subscribers disseminates the key to other users, allowing the other users to decrypt the data without paying. It is noted that while a subscriber could forward the entire data to other users, this would be very costly in cellular networks, generally more than the cost of subscription.

US patent publication 2003/0046539 to Negawa, suggests periodically changing the key and providing the keys to the subscribers on encrypted private unicast channels. This solution, however, is not suitable for a sophisticated disseminating user who continuously provides the keys to other users immediately when the new keys are received.

US patent publication 2002/0039361, to Hawkes et al., suggests supplying each mobile station with a special processing and storage module which is adapted for storing keys and other secret information, without the information being available to the user for dissemination. Such solution requires that all users buy special hardware in order to receive the multicast data and therefore is unpractical.

US patent publication 2002/0138826 to Peterka, suggests transmitting the multicast data in a few copies with different keys. Each copy of the multicast data is provided with a different rate of changing decryption keys. A subscribing user pays for data for a predetermined amount of time and accordingly is provided with a key for a group having a key replacement timing fitting the time for which the user paid. Thus, change of keys is not required when a user leaves the group. However, no method of discouraging sharing of the keys is described.

US patent publication 2002/0136407, to Denning et al., describes a method of encrypting data such that it can be decrypted only if it passed through a predetermined path, at a predetermined location or during a predetermined time range. The sender encrypts the data directed to each location with an encryption key related to the location of the receiver. This method is not suitable for multicast and is not suggested for multicast.

US patent publication 2003/0084284 to Ando et al., describes a method of multicast in which transmitted data is divided into segments which are encrypted with different keys and are selectively transmitted to the users according to the keys they have.

A paper titled: "Watercasting: Distributed Watermarking of Multicast Media", Ian Brown et al., Lecture notes in computer science, vol. 1736, 20 November 1999 describes distributing different versions of encrypted packets to different users as a method of watermarking audiovisual data.

Parviainen et al., "Large Scale Distributed Watermarking of Multicast Media Through Encryption", Internet citation, online, 2001 describes another watermarking method.

Chu et al., "A secure Multicast Protocol With Copyright Protection", Computer Communication Review, ACM, New York, NY, vol. 32, No. 2, April 1, 2002, describes a secure multicast protocol with copyright protection.

Paul Judge et al., "Security Issues and Solutions in Multicast Content Distribution: A Survey", IEEE Network, IEEE Service Center, New York, NY, US, Vol. 17, no. 1, January 1, 2003, is a survey of security solutions for multicast transmission.

### SUMMARY OF THE INVENTION

An aspect of some embodiments of the invention relates to a method of multicast delivery of a data file to receivers. The method includes encrypting the data file and providing one or more keys required for decrypting the file only after the data is provided to the receiver. Providing the keys only after transmission of the data allows having the receivers request for the keys, so that the requests serve as acknowledgement of receiving the data file.

An aspect of some embodiments of the invention relates to a method of multicasting a data block to a plurality of receivers. The block is represented by a plurality of data segments which include redundancy, such that the block can be determined in its entirety even if fewer than all the segments are received. It is noted that some of the data segments may be identical. The segments are divided into groups which are encrypted using different keys. In order to decrypt the block, the receiver optionally requests, from a control unit, the keys it needs for the segments it received. The segments are transmitted in a manner such that different receivers receive segments requiring different keys and therefore require different sets of keys to decrypt the segments and reconstruct the block. A receiver requesting the keys cannot generally distribute the keys to other receivers on a large scale, as the keys will not be usable, based on statistical analysis, by more than a few other receivers.

In some embodiments of the invention, the keys are transmitted on a high loss channel, such that different receivers receive different segments due to the losses of the channel. Alternatively or additionally, different portions of the segments are transmitted on different channels (e.g., different time slots, frequencies, codes), and different receivers tune on to different channels. Optionally, receivers may tune on to a single channel during the entire transmission or may switch between channels during the transmission. In some embodiments of the invention, each receiver is preconfigured with one or more channels to which it listens.

Further alternatively or additionally, different segments are transmitted in different localities, from different multicasting points, for example from different base stations of a cellular network. A receiver may optionally regenerate the block using a valid set of segments collected from a plurality of different multicasting points, and is not limited to segments from a single multicasting point. Thus, a receiver moving during the transmission between different multicasting points can use the data received from different multicast points.

The data segments are optionally generated and encrypted at a single source point, and are transmitted from the source point to the multicasting points on respective unicast channels, optionally passing on cables connecting the source point to the multicast points. As the cost of wireless bandwidth is much higher than the cost of terrestrial bandwidth, the additional cost of distributing different segments or different keys to the multicast points by land lines is relatively small.

Alternatively, the segments are not encrypted (or are encrypted using a different method) on their way to the multicasting points, and the encryption is performed by the multicasting points. In this alternative, the segments may be multicast to the multicasting points, over a cabled network or wirelessly using encryption or frequencies not available to the end user, thus reducing the amount of bandwidth used for distributing the data to the multicasting points. Further alternatively, the data is broken up into segments or is generated at the multicasting points or on the way to the multicasting points.

In some embodiments of the invention, the segments representing the block include FEC encrypted segments, such that a receiver collecting a predetermined number (m) of segments out of the (n) transmitted segments can reconstruct the block. Optionally, sub-groups of the FEC segments, including one or more segments, are encrypted with different keys. If many of the receivers receive the block on a high loss rate channel, such that they receive only m or a few more than m segments, the receivers will generally require different sets of keys for decryption.

Optionally, the keys are changed with time, for example after transmission of every few segments. Alternatively, the segments encrypted with same keys are interleaved between segments encrypted with other keys.

In some embodiments of the invention, the encryption segments are smaller than or equal the size of the FEC segments, such that they do not extend beyond the border between two FEC segments. Thus, an error in a transmitted encryption segment affects only a single FEC segment.

The methods for discouraging key sharing of the present invention may optionally be used with substantially any coding method, from very simple methods to very complex methods. It is noted, however, that using the methods of the present invention serves in itself as a relatively high barrier to illegitimate decryption on a large scale and therefore, relatively simple coding methods, such as symmetric encryption may be used.

The methods of the present invention are generally applied to the data itself and not to keys which are used to encrypt the data. Therefore, a user who rightfully receives the keys to the data cannot easily transfer the decrypted data to a different user, as this would require transferring very large amounts of data.

An aspect of some embodiments of the present invention relates to transmitting same multicast data through a plurality of base stations with different encryption for each of the base stations. In some embodiments of the invention, a mobile station receiving a first portion of the data from a first base station and a second portion of the data from a second base station can reconstruct the data, although the first and second portions were encrypted with different encryption. The different encryption optionally includes use of a different key and/or a different encryption method. Using different encryption schemes for data transmitted by different base stations, limits the possibility of illegal disseminating decryption keys, as keys suitable for data of one base station are not suitable for other base stations.

There is therefore provided, a method of multicasting media having the features of claim 1.

Optionally, generating the plurality of segments comprises generating forward error correction (FEC) segments, such that any group of a predetermined number of non-identical segments can be used to reconstruct the data block. Optionally, generating the plurality of segments comprises generating segments that include a portion of the data block.

Optionally, the plurality of segments include at least one set of duplicate segments.

Optionally, encrypting at least a portion of the segments comprises encrypting such that each data unit represents data from a single segment. Optionally, encrypting at least a portion of the segments comprises encrypting each segment into a single encrypted data unit. Alternatively or additionally, encrypting at least a portion of the segments comprises encrypting data of each segment into a plurality of encrypted data units. Optionally, encrypting data of each segment into a plurality of encrypted data units comprises leaving a portion of each segment not encrypted. Optionally, the non-encrypted portions of the segments are used for transferring preview information. Optionally, the non-encrypted portions are located in different positions in different segments. Alternatively, the non-encrypted portions are located in same positions of substantially all the segments.

Optionally, encrypting at least a portion of at least some of the segments comprises encrypting using a symmetric coding scheme. Optionally, encrypting using a plurality of different keys or methods comprises encrypting using different keys and substantially same methods. Alternatively or additionally, encrypting using a plurality of different keys or methods comprises encrypting using different methods. Optionally, transmitting the encrypted data units comprises transmitting through a plurality of transmission points each of which transmits to different areas. Optionally, transmitting the encrypted data units comprises transmitting through a plurality of base stations. Optionally, each transmission point transmits sufficient data required for reconstruction of the data block.

Optionally, at least some of the transmission points transmit data units representing identical segments encrypted using different keys or methods.

### BRIEF DESCRIPTION OF FIGURES

Particular non-limiting embodiments of the invention will be described with reference to the following description of embodiments in conjunction with the figures. Identical structures, elements or parts which appear in more than one figure are preferably labeled with a same or similar number in all the figures in which they appear, in which:
Fig. 1 is a schematic illustration of a cellular network, useful in explaining an exemplary embodiment of the present invention; and
Fig. 2 is a flowchart of acts performed by a mobile station in receiving a file, in accordance with an exemplary embodiment of the invention.

### DETAILED DESCRIPTION OF EMBODIMENTS

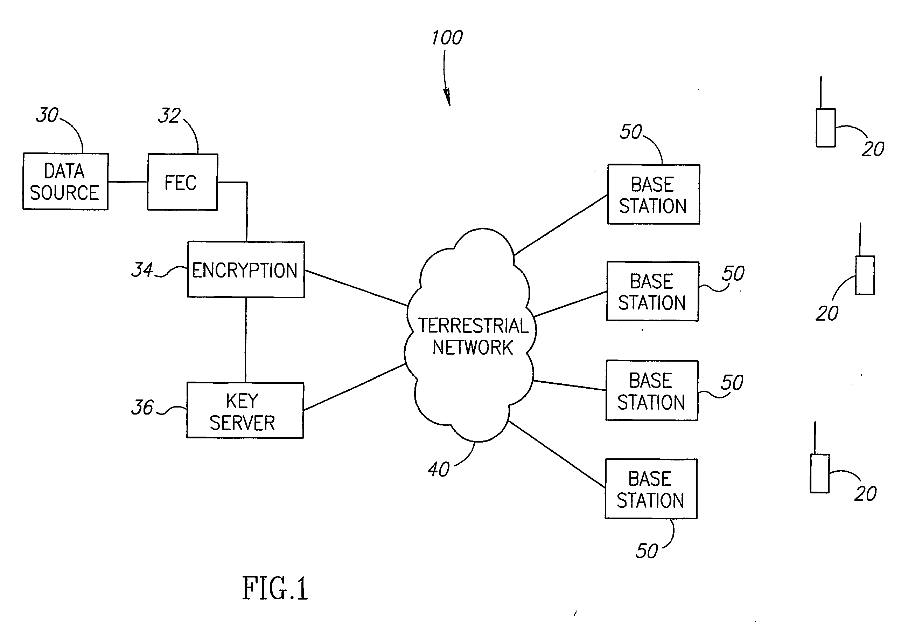

Fig. 1 is a schematic illustration of a cellular network 100, in accordance with an exemplary embodiment of the present invention. Network 100 includes a plurality of base stations 50, which transmit signals to mobile stations 20 in their vicinity. In transmission of multicast data to mobile stations 20, a data source 30 generates files which are to be multicast to subscribing mobile units 20. Optionally, the generated files are broken into blocks of predetermined size, suitable for processing. The blocks are optionally passed to a forward error correction (FEC) unit 32, where a plurality of segments are prepared to represent the block. Optionally, N segments are prepared, such that any M (M<N) of the N segments can be used to reconstruct the block. The FEC segments may be generated using substantially any FEC method known in the art, including one-dimensional, two-dimensional, systematic and non-systematic methods. In an exemplary embodiment of the invention, a FEC method such as described in PCT patent application PCT/IL2004/000204, filed March 3, 2004 and/or in Israel patent application 157,885, titled "Iterative Forward Error Correction", filed September 11, 2003, is used. The FEC segments are optionally transferred to an encryption unit 34, which encrypts the FEC segments, forming respective encrypted segments.

The encrypted segments of each base station 50 are optionally transferred through a terrestrial network 40 of cellular network 100 to their intended base station, from which they are transmitted to mobile stations 20. Base stations 50 operate as multicast transmission points from which transmitted segments of the same data are all identical. The segments from data source 30 to base stations 50 may be different for different segments although they carry the same data. The segments are transmitted to mobile stations 20 using any multicast method known in the art, such as the method described in PCT publication WO03/019840 published March 6, 2003. Optionally, each encrypted segment is transmitted as a respective RLC segment using methods known in the art.

Network 100 optionally includes a key server 36 which provides decryption keys to mobile stations 50. In some embodiments of the invention, users receiving the block (or the entire file), desiring to read the block, contact key server 36 and request the keys they need for the decryption. Alternatively or additionally, some of the keys are provided in multicast, and the users request only the keys that they need which were not multicast to them.

In some embodiments of the invention, for each base station 50, encryption unit 34 prepares differently encrypted segments, using keys which are different from those for the other base stations. Alternatively or additionally, some base stations use the same keys or use partially overlapping groups of keys, in order to limit the number of keys managed by encryption unit 34. Optionally, base stations separated by large distances use the same keys or a partial group of overlapping keys. Alternatively or additionally, base stations generally having small numbers of users use keys which are also used by other base stations. Further alternatively or additionally, all base stations 50 in a same region and/or controlled by a same controller, e.g., a same point-to-multipoint unit PTMU (introduced below) and/or base station controller (BSC), use the same keys.

Optionally, the size of a region of base stations that use the same keys is selected such that a moving mobile will not pass through more than a predetermined number (e.g., 10-20) regions having different keys, so as to limit the number of keys that moving receivers need to request. In some embodiments of the invention, when a region uses more than one key for a single file, the total number of keys that a moving receiver will need to request is limited to less than a predetermined number of keys (e.g., less than 20, 30 or 50). Optionally, the sizes of the regions that have the same keys depend on the expected movement speed of the receiver. For regions in which fast movement is allowed through a large number of cells (i.e., areas governed by respective base stations), the number of neighboring base stations sharing common keys is relatively large (e.g., greater than 10-20). Conversely, in regions in which movement is relatively slow and/or cells are relatively large, the number of cells sharing keys is relatively small (e.g., smaller than 10 or even 6).

Alternatively to sharing keys by neighboring cells, the cells that share keys are close cells that are separated by one or more intervening cells. Thus, a moving receiver does not need many keys, but neighboring receivers cannot necessarily use the same keys.

In some embodiments of the invention, base stations sharing keys share all their keys. Alternatively or additionally, some or all base stations that share keys share only some of their keys.

The base stations that share keys may be predetermined groups of base stations. Alternatively, in order to make unauthorized dissemination of keys more difficult, the grouping of the base station using same keys varies in real time. In some embodiments of the invention, the base station grouping varies every few hours or days. Alternatively, the base station groupings change every few moments and/or for every transmitted message or for every small number (e.g., up to 5-10) of messages. Further alternatively or additionally, the base station groupings may be changed within the transmission of a single message.

In some embodiments of the invention, the grouping of the base stations is changed randomly or in a pseudo random manner in order to prevent hackers from determining the grouping patterns. Alternatively or additionally, the grouping is adjusted according to the load on the network. Optionally, when the network is relatively loaded, fewer keys are used, for example having adjacent base stations use the same keys. This reduces the amount of bandwidth required for disseminating the keys and for providing the data to the base stations. When the network is relatively not loaded, more keys are used, to allow for better protection of the data. Alternatively or additionally, the local diversity of encryption keys is configurable by a network operator.

Each base station 50 optionally uses a plurality of different keys for the segments of a single block. The number of keys used in encrypting the data of a single block for a single base station 50 is optionally determined as a compromise between using a large number of keys required for key diversity which prevents illegitimate dissemination of keys and a small number of keys, which reduces the amount of bandwidth spent on dissemination of keys to users. In an exemplary embodiment of the invention, a different key is used for about every 10-20 segments. Optionally, segments that are encrypted with the same key include sequential portions of data from the block. This option reduces the number of keys a user requires on the average. Therefore, users requiring a large number of keys raise more suspicion that they disseminate keys to others. Alternatively, segments encrypted with the same key are taken from separated portions of the block such that the segments encrypted with a single key are interleaved between segments encrypted with other keys.

In some cases, some or all of the data segments of the block are transmitted a plurality of times in order to ensure proper reception, for example when mobile stations 20 may tune onto the channel at different times. Optionally, each time the segments are transmitted they are encrypted with different keys.

In some embodiments of the invention, each transmitted segment includes a header which states the block and/or file to which it belongs, the position of the segment in an FEC array representing the block and an ID of the key required for decryption. The header is optionally not encrypted, so that the receiver can determine which segments are duplicates and can be discarded, whether a sufficient number of segments were received for reconstruction of the block and which keys are required for decrypting the segments. Alternatively or additionally, the segments are included in larger packets, for example IP packets, and the control information of the segment is included in a control section of the IP packet including the segment.

Optionally, the segment headers also include general information on the FEC method and/or encryption method. Alternatively or additionally, the general information is provided in the IP packets and/or at the beginning of the multicast. Further alternatively or additionally, the general information is provided on a separate channel, such as a broadcast channel describing the available multicast data and/or on a separate unicast channel used to provide the keys or for providing data at the beginning of the transmission.

Although data source 30, FEC unit 32, encryption unit 34 and key server 36 are shown as separate units, in some embodiments of the invention, one or more of these units are implemented by a single entity. For example, encryption unit 34 and key server 36 may be implemented on a single processor and/or may use a common key database. In some embodiments of the invention, data source 30 performs the task of FEC unit 32 and/or encryption unit 34 before forwarding the packets. In other embodiments of the invention, the encryption is performed at base stations 50 or at processors associated with each of the base stations. For example, the encryption may be performed at point to multi-point units (PTMUs) of the base stations, which PTMUs are described in the above mentioned PCT patent application PCT/IL2004/000204. Optionally, in these embodiments, the encryption ID is generated by each base station and/or PTMU from a static (i.e., changes infrequently if at all) code of the base station and a time dependent code which may be common to all base stations or is generated separately for each base station. Optionally, the static code is kept secret from the users, to make it harder on users to guess the encryption keys.

In some embodiments of the invention, two or more of the entities of network 100, for example encryption unit 34 and base stations 50, have the ability to encrypt the segments. The unit that actually performs the encryption at any specific time optionally depends on the available processing resources on the units. For example, when the base stations are very loaded, the encryption is optionally performed by encryption unit 34.

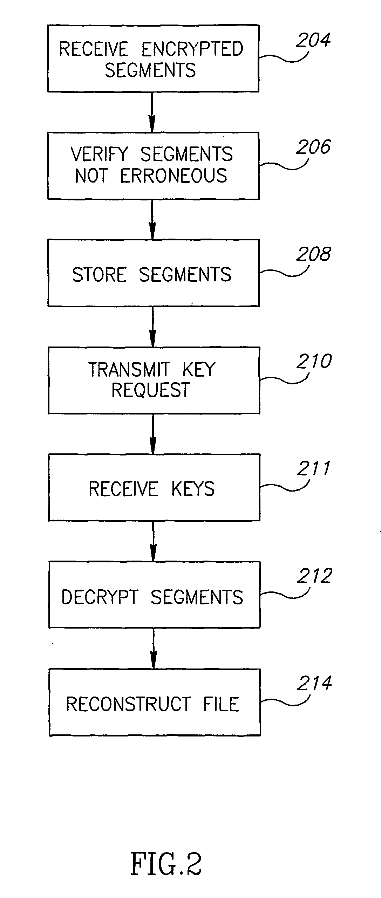

Fig. 2 is a flowchart of acts performed by a mobile station in receiving a file, in accordance with an exemplary embodiment of the invention. The mobile station optionally tunes onto a multicast channel and receives (204) encrypted segments. The mobile station optionally verifies (206) that the packets were received without error. For example, the segments may include a CRC field, the value of which is used to check that the segment was received intact. The CRC check may be performed by an application layer performing the decryption and reconstruction or by a lower protocol layer. Segments that were received without error are optionally stored (208) in a memory of the mobile station. When a group of segments sufficient to allow reconstruction of a block is accumulated, the mobile station transmits (210) a message to key server 36, with IDs of the keys it requires in order to decrypt the segments it received. Optionally, the receiver knows that a sufficient number of packets were received when a predetermined number of packets sufficient for reconstruction were received. Alternatively, the receiver simulates the reconstruction, without actually performing the reconstruction which cannot be performed without the keys, in order to determine whether a sufficient number of packets were received. The simulations are optionally performed as described in the above mentioned Israel patent application 157,885.

Key server 36 transmits the keys generally on a unicast transmission, to the mobile station (211), which uses the keys to decrypt (212) the segments. Optionally, the keys are transmitted in a compressed format. The block is then reconstructed (214) from the decrypted segments according to the FEC method used.

In some embodiments of the invention, in storing (208) the received segments, the mobile unit discards segments carrying the same data (even if the segments were encrypted with a different encryption). Optionally, in any case a duplicate segment is received, the later received segment is discarded. Alternatively, if one of the duplicate segments can be opened with the same key as a different segment already received, the other copy of the duplicate segment is discarded. In some embodiments of the invention, a user not receiving a sufficient number of multicast segments required for reconstruction during the multicast transmission may request supplement of data on a unicast link, for example along with requesting the keys.

Key server 36 optionally keeps track of the mobile stations requesting keys, for billing purposes. In some embodiments of the invention, key server 36 keeps special track of mobile stations that request particularly large sets of keys. Optionally, the content provider checks users that persistently, for many files, request large numbers of keys, to determine if they disseminate the keys to other users who are not being billed. In an exemplary embodiment of the invention, each file is transmitted 3-5 times with a 40-100% redundancy. In accordance with this exemplary embodiment, a request for about 25-30% of the keys is considered reasonable.

Alternatively or additionally to checking the number of keys requested, key server 36 checks whether there is a possibility that the requesting mobile station actually needs all the keys requested by the mobile station. For example, a mobile station requesting keys belonging to packets transmitted in locations separated by a distance which cannot be traveled during the entire transmission time of the file would be considered suspicious. In some embodiments of the invention, when a mobile station requests two keys which can only be used for the same segment (with different encryption) the reason is enquired.

Optionally, when a suspicious request for keys is received, an alarm message is sent to a controller of network 100. Alternatively or additionally, a periodic report on suspicious key requests is initiated. In some embodiments of the invention, location data on the mobile station initiating the suspicious request for keys is determined.

In some embodiments of the invention, the key IDs associated with the segments that are transmitted to key server 36 in requesting the keys, are not allocated in any consecutive order, but rather are selected randomly. This makes requesting keys for segments that the user did not receive, in order to disseminate the keys to other users who do not pay for the keys, harder. Optionally, the key IDs have a length which is sufficient to allow use of only some of the possible values in the keys, so as to make it more difficult for users to guess key IDs. Optionally, a manager of the network follows up on users that request non-existing keys. The length of the key ID field is optionally selected as a compromise between a long length which reduces the chances of illegal key dissemination and a short length which reduces the bandwidth required for key IDs. In an exemplary embodiment of the invention, the segment headers add an overhead of about 1-2%.

Alternatively to a single number serving as the key ID, the key ID may be formed of a plurality of fields, such as a first field identifying the base station 50 and a second field identifying the specific key used for the specific segment.

In some embodiments of the invention, different key IDs are used to represent the same key. This gives the advantage of using less bandwidth for providing the keys, while not allowing the subscribers to know before asking for the keys that the keys are the same. For example, different cells may use different key IDs for same keys used in common by the cells.

Optionally, mobile stations do not request (210) any keys unless they received sufficient data to allow reconstruction of the block. Thus, the mobile station is not billed for the block or for a file unless the block was received in a manner which allows reconstruction. This prevents billing mobile stations for data they could not reconstruct, for example due to an interference in communications between the base station and the mobile station in the middle of multicast data reception.

Alternatively to transmitting (211) all the required keys to the mobile station after all the data was received by the mobile stations, some or all of the keys are provided before the multicast transmission and/or along with the multicast transmission. In some embodiments of the invention, some of the keys are provided in a multicast transmission.

The implementation of the present invention allows using relatively simple encryption methods, since in order to reconstruct a file the receiver needs to break the code for a plurality of different keys. In addition, even if a subscriber succeeds in breaking the code and determining the keys for the data it received, most other users cannot reconstruct the file using these keys as they need other keys. In some embodiments of the invention, the encryption method used is sufficiently complex to prevent breaking of the code by small processors, such as hosted by mobile stations 20, but which may be breakable by stronger processors not usually hosted by mobile units. In some embodiments of the invention, the encryption is performed using a single key for both encryption and decryption. Encryption schemes using a single key for encryption and decryption require less processing resources for decryption, than public-private schemes, so that the battery of the mobile units is not drained out too fast.

Optionally, the encryption is performed in accordance with a polynomial encryption method. Alternatively or additionally, the encryption is performed using a low density parity code (LDPC) such as the Tornado code. Alternatively, the encryption is performed using a public/private key scheme. In some embodiments of the invention, when it is desired to minimize the processing power spent on decryption, a low-complexity encryption scheme is used. For example, a streaming encryption scheme based on generator polynomials may be used.

It is noted that when the channel between base stations 50 and mobile stations 20 has a high loss rate, for example, due to high noise levels and/or late tuning of mobile stations 20 onto the channel, the chances of several mobile stations 20 requiring exactly the same keys is very small. Optionally, the number of keys used is set such that on the average no more than 5-10 users require the same keys. Alternatively or additionally, the number of keys used is selected such that, on the average, in each cell no more than 5-10% of the receivers require the same keys. Further alternatively or additionally, the number of keys used is selected, such that no more than 0.1-1% of the receivers in the network, on the average, require the same set of keys. Further alternatively or additionally, the number of keys used is adjusted according to the importance of the encrypted data.

In the above description, the same encryption methods are used for all the base stations at all times, but with different keys. Alternatively, the encryption methods are varied from time to time in order to make the breaking of the code more difficult. In some embodiments of the invention, each mobile station 20 optionally has software that can decrypt a plurality of different codes. Along with each key received from key server 36, the receiver is optionally provided with identification of a decryption method to be used with the key.

Alternatively to encrypting segments of the same size as the FEC segments, the encryption may be performed on smaller segments. In some embodiments of the invention, the encryption segments do not range over the border between two FEC segments, so that an error in a transmitted encryption segment affects only a single FEC segment.

In an exemplary embodiment of the invention, the DES encryption algorithm is used. The DES encryption algorithm operates on encryption segments of 8 bytes. Optionally, the FEC segments are larger than the encryption segments, for example including 30 bytes in each segment. In some embodiments of the invention, each FEC segment is broken into four portions: three encrypted segments of 8 bytes each, and a non-encrypted segment of 6 bytes.

In some embodiments of the invention, the non-encrypted bytes are located in the same positions of the FEC segments, such that the receivers can determine 20% of the data without decryption. Optionally, these embodiments are used when 20% of the data file cannot be used without the rest of the data. Alternatively or additionally, at least some of the 20% of the data is used to transfer previews, ads and/or other data which is to be supplied to the users for free. Alternatively, the non-encrypted bytes are positioned at different positions in the FEC segments for different FEC segments. Using a substantially even distribution, each position carries 80% encrypted data and 20% unencrypted data. Thus, for each position, a receiver without encryption keys has at most 20% of the data, if no data is lost. This alternative is optionally used when it is not possible to reconstruct the file only with the unencrypted data. It is noted that although the above discussion uses specific numbers for the unencrypted portion, the principals of the invention may be used also for other ratios between encrypted and non-encrypted data in the FEC segments.

Although the above description relates to using FEC segments, the present invention may be used with other redundancy methods, such as duplication and/or repeated transmission on different channels and/or in different locations.

The above description relates to base stations that serve as multicast transmission points. It is noted that the present invention may be used for other types of multicast transmission points, such as wireless local area network (WLAN) access points. It is noted that the present invention may be used also in networks that have a plurality of different types of multicast transmission points. Furthermore, the present invention may be used with one or more transmission points that transmit signals on a plurality of different channels (e.g., frequency or code channels), each of the channels defining a separate respective cell.

It will be appreciated that the above described methods may be varied in many ways, including, changing the order of steps, and the exact implementation used. The methods of the present invention may be performed in various protocol layers and may be performed for a single transmission system in a plurality of communication protocol layers. It should also be appreciated that the above described methods and apparatus are to be interpreted as including apparatus for carrying out the methods and methods of using the apparatus.

The present invention has been described using non-limiting detailed descriptions of embodiments thereof that are provided by way of example and are not intended to limit the scope of the invention. For example, different keys may be used only for different base stations without changing the keys for different segments of the same block from a same base station. Thus, the bandwidth required for key dissemination is small while risking a local illegal dissemination of keys. It should be understood that features and/or steps described with respect to one embodiment may be used with other embodiments and that not all embodiments of the invention have all of the features and/or steps shown in a particular figure or described with respect to one of the embodiments. Variations of embodiments described will occur to persons of the art.

It is noted that some of the above described embodiments may describe the best mode contemplated by the inventors and therefore may include structure, acts or details of structures and acts that may not be essential to the invention and which are described as examples. Structure and acts described herein are replaceable by equivalents which perform the same function, even if the structure or acts are different, as known in the art. Therefore, the scope of the invention is limited only by the elements and limitations as used in the claims.

## Claims

1. A method of multicasting data in a multi transmission-point network (100), comprising:
providing a data block, from a single source (30), for multicasting by the network;
generating a plurality of segments that represent the data block;
encrypting at least some of the segments, so as to generate encrypted data units; and
transmitting the encrypted data units through a plurality of transmission points (50) on multicast channels of a network (100) in which a receiver (20) can reconstruct a data block from segments received through a plurality of transmission points (50),
wherein
the encrypting of at least some of the segments is performed using a plurality of different encryption keys or methods; and
at least two of the transmission points (50) transmit encrypted data units which represent the same segments with different encryption.

2. A method according to claim 1, wherein the transmission points (50) transmit the encrypted data units to the receivers (20) they service on a multicast channel having a loss rate.

3. A method according to claim 1 or claim 2, wherein generating the plurality of segments comprises generating forward error correction (FEC) segments.

4. A method according to claim 3, wherein generating the plurality of segments comprises generating forward error correction (FEC) segments, such that any group of a predetermined number of non-identical segments can be used to reconstruct the data block.

5. A method according to any of the preceding claims, wherein the transmission points (50) of at least one group of two or more transmission points (50) transmit data units encrypted using same keys.

6. A method according to claim 5, wherein the transmission points (50) included in a group that transmit data units encrypted using same keys vary dynamically over time.

7. A method according to claim 6, wherein the transmission points (50) included in a group that transmit data units encrypted using same keys vary according to the load on the network.

8. A method according to any of the preceding claims, wherein at least one of the transmission points (50) transmits data units encrypted using a plurality of different keys or methods.

9. A method according to any of the preceding claims, wherein encrypting at least a portion of the generated segments comprises encrypting with a sufficient number of keys, so that given a loss rate of the multicast channels, less than a predetermined percentage of receivers (20) of the data block, will require, on the average, the same set of keys for decryption.

10. A method according to claim 9, wherein encrypting at least a portion of the generated segments comprises encrypting with a sufficient number of keys, so that given a loss rate of the multicast channels, less than ten percent of the receivers (20) of the data block will require on the average the same set of keys for decryption.

11. A method according to any of the preceding claims, comprising receiving, by a key server 34 of network 100, requests for keys required for decryption and keeping track of receivers that request a suspiciously large number of keys and/or request keys corresponding to non-existent identifications.

12. A method according to any of the preceding claims, wherein the encryption is performed at a single location (34).

13. A method according to any of the preceding claims, comprising receiving, by a key server 34 of network 100, from a receiver 20 requests for keys, the requests being transmitted only after the receiver 20 determined that a sufficient amount of data was received to allow reconstruction of the data block.

## Patentansprüche

1. Verfahren zum Multicasten von Daten in einem Mehrpunktübertragungsnetzwerk (100), umfassend:
Bereitstellen eines Datenblocks aus einer einzigen Quelle (30) zum Multicasten über das Netzwerk;
Erzeugen einer Vielzahl von Segmenten, die den Datenblock darstellen;
Verschlüsseln wenigstens einiger der Segmente, um verschlüsselte Dateneinheiten zu erzeugen; und
Übertragen der verschlüsselten Dateneinheit durch eine Vielzahl von Übertragungspunkten (50) auf Multicastkanälen eines Netzwerks (100), in welchem ein Empfänger (20) einen Datenblock aus Segmenten, die er durch eine Vielzahl von Übertragungspunkten (50) erhalten hat, rekonstruieren kann, wobei das Verschlüsseln wenigstens einiger der Segmente unter Verwendung einer Vielzahl von verschiedenen Verschlüsselungsschlüsseln oder Verschlüsselungsverfahren durchgeführt wird;
und wobei wenigstens zwei der Übertragungspunkte (50) verschlüsselte Dateneinheiten übertragen, die die gleichen Segmente mit verschiedener Verschlüsselung darstellen.

2. Verfahren nach Anspruch 1, wobei die Übertragungspunkte (50) die verschlüsselten Dateneinheiten an die Empfänger (20) übertragen, die sie in einem Multicastkanal mit einer Verlustrate bedienen.

3. Verfahren nach Anspruch 1 oder 2, wobei das Erzeugen der Vielzahl von Segmenten das Erzeugen von vorwärts gerichteter Fehlerkorrektursegmente (FEC) umfasst.

4. Verfahren nach Anspruch 3, wobei das Erzeugen der Vielzahl von Segmenten das Erzeugen von vorwärts gerichteten Fehlerkorrektursegmenten (FEC) umfasst, so dass jede Gruppe einer vorbestimmten Anzahl von nicht identischen Segmenten verwendet werden kann, um den Datenblock zu rekonstruieren.

5. Verfahren nach einem der vorhergehenden Ansprüche, wobei die Übertragungspunkte (50) von wenigstens einer Gruppe aus zwei oder mehr Übertragungspunkten (50) verschlüsselte Dateneinheiten übertragen, die die gleichen Schlüssel verwenden.

6. Verfahren nach Anspruch 5, wobei die in einer Gruppe enthaltenen Übertragungspunkte (50), die verschlüsselte Dateneinheiten übertragen, die die gleichen Schlüssel verwenden, sich dynamisch über die Zeit ändern.

7. Verfahren nach Anspruch 6, wobei die in einer Gruppe enthaltenen Übertragungspunkte (50), die verschlüsselte Dateneinheiten übertragen, die die gleichen Schlüssel verwenden, gemäß der Auslastung in dem Netzwerk variieren.

8. Verfahren nach einem der vorhergehenden Ansprüche, wobei wenigstens einer der Übertragungspunkte (50) verschlüsselte Dateneinheiten überträgt, die eine Vielzahl verschiedener Schlüssel oder Verfahren verwenden.

9. Verfahren nach einem der vorhergehenden Ansprüche, wobei das Verschlüsseln wenigstens eines Teils der erzeugten Segmente das Verschlüsseln mit einer genügenden Anzahl von Schlüsseln umfasst, so dass bei einer gegebenen Verlustrate der Multicastkanäle weniger als ein vorbestimmter Prozentsatz der Empfänger (20) des Datenblocks im Mittel den gleichen Schlüsselsatz zum Entschlüsseln anfordert.

10. Verfahren nach Anspruch 9, wobei das Verschlüsseln wenigstens eines Teils der erzeugten Segmente das Verschlüsseln mit einer genügenden Anzahl von Schlüsseln umfasst, so das bei einer gegebenen Verlustrate der Multicastkanäle weniger als 10 % der Empfänger (20) des Datenblocks im Mittel den gleichen Schlüsselsatz zum Entschlüsseln anfordern.

11. Verfahren nach einem der vorhergehenden Ansprüche, umfassend das Empfangen von Anforderungen nach Schlüssel über einen Schlüsselserver (34) des Netzwerks (100), die für das Entschlüsseln benötigt werden, und das Verfolgen von Empfängern, die eine verdächtig große Anzahl an Schlüsseln anfordern und/oder Schlüssel anfordern, die nicht existierenden Identifikationen entsprechen.

12. Verfahren nach einem der vorhergehenden Ansprüche, wobei das Verschlüsseln an einer einzigen Stelle (34) ausgeführt wird.

13. Verfahren nach einem der vorhergehenden Ansprüche, umfassend das Empfangen von Anforderungen nach Schlüssel von einem Empfänger (20) über einen Schlüsselserver (34) eines Netzwerkes (100), wobei die Anforderungen nur übertragen werden, nachdem der Empfänger (20) bestimmt hat, dass eine ausreichende Anzahl von Daten erhalten wurde, um die Rekonstruktion des Datenblocks zu ermöglichen.

## Revendications

1. Procédé de multidiffusion de données dans un réseau à points de transmission multiples (100), comprenant :
la fourniture d'un bloc de données, à partir d'une source unique (30), pour la multidiffusion par le réseau ;
la génération d'une pluralité de segments qui représentent le bloc de donnés ;
le cryptage d'au moins certains des segments, afin de générer des unités de données cryptées ; et
la transmission des unités de données cryptées à travers une pluralité de points de transmission (50) sur des canaux de multidiffusion d'un réseau (100) dans lequel un récepteur (20) peut reconstruire un bloc de données à partir de segments reçus à travers une pluralité de points de transmission (50),
dans lequel
le cryptage d'au moins certains des segments est réalisé en utilisant une pluralité de clés ou procédés de cryptage différents; et
au moins deux des points de transmission (50) transmettent des unités de données cryptées qui représentent les mêmes segments avec un cryptage différent.

2. Procédé selon la revendication 1, dans lequel les points de transmission (50) transmettent les unités de données cryptées aux récepteurs (20) qu'ils servent sur un canal de multidiffusion ayant un taux de perte.

3. Procédé selon la revendication 1 ou la revendication 2, dans lequel la génération de la pluralité de segments comprend la génération de segments de correction d'erreur vers l'avant (FEC).

4. Procédé selon la revendication 3, dans lequel la génération de la pluralité de segments comprend la génération de segments de correction d'erreur vers l'avant (FEC), de sorte que tout groupe d'un nombre prédéterminé de segments non identiques peut être utilisé pour reconstruire le bloc de données.

5. Procédé selon l'une quelconque des revendications précédentes, dans lequel les points de transmission (50) d'au moins un groupe de deux ou plusieurs points de transmission (50) transmettent des unités de données cryptées en utilisant les mêmes clés.

6. Procédé selon la revendication 5, dans lequel les points de transmission (50) compris dans un groupe qui transmettent des unités de données cryptées utilisant les mêmes clés varient dynamiquement au cours du temps.

7. Procédé selon la revendication 6, dans lequel les points de transmission (50) compris dans un groupe qui transmettent des unités de données cryptées utilisant les mêmes clés varient selon la charge sur le réseau.

8. Procédé selon l'une quelconque des revendications précédentes, dans lequel au moins un des points de transmission (50) transmet des unités de données cryptées en utilisant une pluralité de clés ou procédés différents.

9. Procédé selon l'une quelconque des revendications précédentes, dans lequel le cryptage d'au moins une partie des segments générés comprend le cryptage avec un nombre suffisant de clés, de sorte qu'un taux de perte donné des canaux multidiffusion, inférieur à un pourcentage prédéterminé de récepteurs (20) du bloc de données, requérra, en moyenne, le même ensemble de clés pour le décryptage.

10. Procédé selon la revendication 9, dans lequel le cryptage d'au moins une partie des segments générés comprend le cryptage avec un nombre suffisant de clés, de sorte qu'un taux de perte donné des canaux de multidiffusion, inférieur à dix pourcent des récepteurs (20) du bloc de données requerra en moyenne le même ensemble de clés pour le décryptage.

11. Procédé selon l'une quelconque des revendications précédentes, comprenant la réception, par un serveur de clé (34) de réseau (100), de demandes pour des clés requises pour le décryptage et le maintien de suivi de récepteurs qui demandent un grand nombre suspicieux de clés et/ou de clés de demande correspondant à des identifications non existantes.

12. Procédé selon l'une quelconque des revendications précédentes, dans lequel le cryptage est réalisé à un emplacement unique (34).

13. Procédé selon l'une quelconque des revendications précédentes, comprenant la réception, par un serveur clé (34) de réseau (100), à partir du récepteur (20) des demandes pour des clés, les demandes étant transmises seulement après que le récepteur (20) ait déterminé qu'une quantité suffisante de données était reçue pour permettre la reconstruction du bloc de données.
